(19) Europäisches Patentamt
European Patent Office
Office européen des brevets

(11) **EP 3 859 051 A1**

(12) **EUROPEAN PATENT APPLICATION**
published in accordance with Art. 153(4) EPC

(43) Date of publication:
**04.08.2021 Bulletin 2021/31**

(21) Application number: **19865087.1**

(22) Date of filing: **20.09.2019**

(51) Int Cl.:
**C25B 13/02** *(2006.01)*     **C25B 1/04** *(2021.01)*

(86) International application number:
**PCT/JP2019/037016**

(87) International publication number:
**WO 2020/066911 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2018 JP 2018181065**

(71) Applicant: **Nippon Shokubai Co., Ltd.**
**Osaka-shi, Osaka 541-0043 (JP)**

(72) Inventors:
• **AKUTAGAWA, Hironobu**
**Suita-shi, Osaka 564-0034 (JP)**
• **NAKAYAMA, Shinya**
**Suita-shi, Osaka 564-0034 (JP)**
• **HARADA, Hiroko**
**Suita-shi, Osaka 564-0034 (JP)**
• **FURUSHO, Kazuki**
**Suita-shi, Osaka 564-0034 (JP)**
• **MISAWA, Yuji**
**Suita-shi, Osaka 564-0034 (JP)**

(74) Representative: **Müller-Boré & Partner**
**Patentanwälte PartG mbB**
**Friedenheimer Brücke 21**
**80639 München (DE)**

(54) **DIAPHRAGM FOR ELECTROLYSIS OF ALKALINE WATER**

(57) In the present invention, a diaphragm for alkaline water electrolysis comprising an organic polymer and inorganic particles is provided. The diaphragm has pores with an average pore diameter of 0.05 $\mu$m to 0.6 $\mu$m and has 25% to 80% of porosity. Each of the pores is defined by an area enclosed by an outside edge in a range in a cross-section perpendicular to a surface of the diaphragm, and the range is located: with respect to a width $<a>$ of the cross-section, $0.4 \times <a>$ or more away from both ends in a longitudinal direction of the cross-section toward a center; and between positions located 2 $\mu$m and 15 $\mu$m away from the surface in a depth direction of the diaphragm.

**Description**

THECHNICAL FIELD

The present invention relates to a diaphragm for alkaline water electrolysis.

BACKGROUND

Conventionally, the introduction of renewable energy using natural energy such as solar power, wind power and geothermal has been promoted in order to realize a low-carbon society. Among the renewable energy, an amount of electric power generated by the wind power, the solar power, or the like fluctuates depending on the weather conditions, so the supply and demand of the electric power cannot be balanced and surplus electric power is generated. In recent years, a technology called Power to Gas for storing and using such the surplus electric power in forms of energy has been drawing attention. Specifically, in the above-mentioned technology, the surplus electric power is converted into gaseous fuels such as hydrogen and methane with water electrolysis, stored and used as the gaseous fuels.

The water electrolysis is known as an industrial method for producing hydrogen. It is usually performed by applying a direct current to water containing an electrolyte such as sodium hydroxide and potassium hydroxide. The electrolyte is introduced for increasing the conductivity. For the water electrolysis as such, an electrolytic cell having an anode chamber and a cathode chamber, which are partitioned by a diaphragm, is used.

The water electrolysis is performed by transferring electrons (or ions). Therefore, in order to efficiently carry out the electrolysis, the diaphragm is required to have high ion permeability. Further, the diaphragm is required to have gas barrier properties that can block oxygen generated in the anode chamber and hydrogen generated in the cathode chamber. The water electrolysis is performed with an alkaline aqueous solution having a high concentration of about 30% and is performed at about 80 to 90° C. Therefore, the diaphragm is also required to have high temperature resistance and alkali resistance.

A variety of diaphragms for alkaline water electrolysis to be used for the water electrolysis have been proposed so far.

For example, Patent Literatures 1 and 2 disclose diaphragms for alkaline water electrolysis each including a sheet-shaped porous support and a microporous membrane containing an organic polymer resin, and the microporous membrane is stacked on one side or both sides of the porous support. In these diaphragms, diameters of the pores made of only resin at the surface and the inside are specified.

As the diaphragms for alkaline water electrolysis, a diaphragm having both higher gas barrier properties and higher ionic conductivity (ion permeability) has been demanded.

CITATION LIST

PATENT LITERATURE

[Patent Literature 1] JP 2013-204146 A
[Patent Literature 2] JP 2014-129563 A

SUMMARY

TECHNICAL PROBLEM

An object of the present invention is to provide a diaphragm for alkaline water electrolysis, which has both higher gas barrier properties and higher ionic conductivity (ion permeability).

SOLUTION TO PROBLEM

The present inventors have found that it is possible to provide a diaphragm for alkaline water electrolysis, which has both higher ionic conductivity (ion permeability) and higher gas barrier properties, by controlling an average pore diameter in a cross section of the diaphragm for alkaline water electrolysis. Then finally, they have completed the present invention.

In the present invention, a diaphragm for alkaline water electrolysis comprises an organic polymer and inorganic particles. The diaphragm has pores with an average pore diameter of 0.05 $\mu$m to 0.6 $\mu$m in a range in a cross-section perpendicular to a surface of the diaphragm. The range is located: with respect to a width <a> of the cross-section, 0.4 × <a> or more away from both ends in a longitudinal direction (of the cross-section) toward a center; and between positions located 2 μm and 15 μm away from the surface in a depth direction of the diaphragm. Each of the pores is defined by an area enclosed by an outside edge in the cross-section. Further, the diaphragm has 25% to 80% of porosity.

ADVANTAGEOUS EFFECTS OF INVENTION

The diaphragm for alkaline water electrolysis of the present invention has both higher gas barrier properties and higher ionic conductivity (ion permeability), and can be suitably used for water electrolysis.

BRIEF DESCRIPTION OF DRAWINGS

Fig. 1 is a figure which schematically shows one embodiment of the diaphragm for alkaline water electrolysis of the present invention.
Fig. 2 is a figure which schematically shows a range in a cross-section perpendicular to a surface of the diaphragm. The range is located: with respect to a width <a> of the cross-section, 0.4 × <a> or more away from both ends in a longitudinal direction toward a center; and between positions located 2 μm and 15 μm away from the surface in a depth direction of the diaphragm.

DESCRIPTION OF EMBODIMENTS

The present invention is specifically described below.
Any combination of two or more of the following preferred embodiments of the present invention is also preferred embodiments of the present invention.

1. Diaphragm for alkaline water electrolysis

In the present invention, a diaphragm for alkaline water electrolysis comprises an organic polymer and inorganic particles. The diaphragm has pores with an average pore diameter of 0.05 μm to 0.6 μm in the following range in a cross-section perpendicular to a surface of the diaphragm. The range is located: with respect to a width <a> of the cross-section, 0.4 × <a> or more away from both ends in a longitudinal direction of the cross-section toward a center; and between positions located 2 μm and 15 μm away from the surface in a depth direction of the diaphragm. Each of the pores is defined by an area enclosed by an outside edge in the cross-section. Further, the diaphragm has 25% to 80% of porosity.
The diaphragm for alkaline water electrolysis of the present invention is a diaphragm that has both higher gas barrier properties and higher ionic conductivity (ion permeability). In the present specification, the description "A-B" means "A or more and B or less".

1-1 Organic polymer

The diaphragm for alkaline water electrolysis of the present invention contains the organic polymer. The organic polymer preferably keeps the inorganic particles. The organic polymer preferably functions as a partition keeping the inorganic particles, and is possible to suppress the inorganic particles from falling out of the diaphragm in an alkaline solution while keeping a reduction of hydrophilic surfaces of the inorganic particles described later to a minimum.
The organic polymer is not particularly limited as long as it is a resin (R) that can exhibit the effects of the present invention. The organic polymer preferably keeps the particle surface of the inorganic particles, more preferably keeps the particles in a state where coating area on the particle surface is small, and is preferably suppressed from swelling in the alkaline solution. Examples of the resin (R) include fluorine resins such as polyvinylidene fluoride and polytetrafluoroethylene; olefin resins such as polypropylene; and aromatic hydrocarbon resins such as polysulfone and polystyrene. These may be used alone or in combination of two or more. Among them, aromatic hydrocarbon resins are preferable because they can lead the diaphragm for alkaline water electrolysis to have more excellent resistance to heat and alkali.
Specific examples of the aromatic hydrocarbon resins include polyethylene terephthalate, polybutylene terephthalate, polybutylene naphthalate, polystyrene, polysulfone, polyether sulfone, polyarylene sulfide resins such as polyphenylene sulfide, polyphenyl sulfone, polyarylate, polyetherimide, polyimide, and polyamideimide. Among them, at least one selected from the group consisting of polysulfone, polyether sulfone and polyphenyl sulfone is preferable in order to achieve much better alkali resistance. Polysulfone or polyether sulfone is more preferred in terms of manufacturing.

Use of at least one selected from the group consisting of polysulfone, polyether sulfone and polyphenyl sulfone can lead the diaphragm for alkaline water electrolysis to have a lower membrane resistance and higher alkali resistance. Because of the higher alkali resistance, the diaphragm can further have much better stabilities of a size, a mass and the membrane resistance and can have a much better effect of suppressing generation of new voids, when it is used in the alkali solution for a long time.

A content of the resin (R) is preferably 3 to 40 % by mass in 100% by mass of the diaphragm for alkaline water electrolysis. When the content of the resin (R) is within the above range, the elution of the inorganic component from the diaphragm for alkaline water electrolysis in the alkaline solution can be suppressed even more while the diaphragm for alkaline water electrolysis has good ion permeability and good toughness. Further, the diaphragm for alkaline water electrolysis can also have excellent ion permeability, gas barrier properties, heat resistance and alkali resistance. The content of the resin (R) is more preferably 5 to 35 % by mass, and further preferably 7 to 30 % by mass, in 100% by mass of the diaphragm for alkaline water electrolysis.

The content of the resin (R) is, when the diaphragm for alkaline water electrolysis of the present invention does not include a porous support described below, preferably 5 to 40 % by mass, more preferably 10 to 35 % by mass, and further preferably 15 to 30 % by mass, in 100% by mass of the diaphragm for alkaline water electrolysis. When the diaphragm for alkaline water electrolysis of the present invention includes the porous support described below as the organic polymer, the content of the resin (R) is preferably 3 to 20 % by mass, more preferably 5 to 18 % by mass, and further preferably 7 to 15 % by mass, in 100 % by mass of the diaphragm for alkaline water electrolysis.

The diaphragm for alkaline water electrolysis of the present invention preferably contains the resin (R) in an amount of 10 to 40 parts by mass, more preferably 12 to 35 parts by mass, still more preferably 15 to 33 parts by mass relative to 100 parts by mass of the inorganic particles mentioned below. When inorganic particles - resin (R) content ratio is within the above range, the elution of the inorganic component from the diaphragm for alkaline water electrolysis in the alkaline solution can be suppressed even more. Further, the diaphragm for alkaline water electrolysis can also have excellent ion permeability, gas barrier properties, flexibility, heat resistance and alkali resistance.


1-1-1 Porous support

The diaphragm for alkaline water electrolysis of the present invention includes the above-mentioned organic polymer and the inorganic particles mentioned below, and may further include the porous support as the organic polymer. The porous support is the porous organic polymer, does not suppress ion permeability, and is a member usable as a support of the diaphragm for alkaline water electrolysis. The porous support is preferably a sheet-like member.

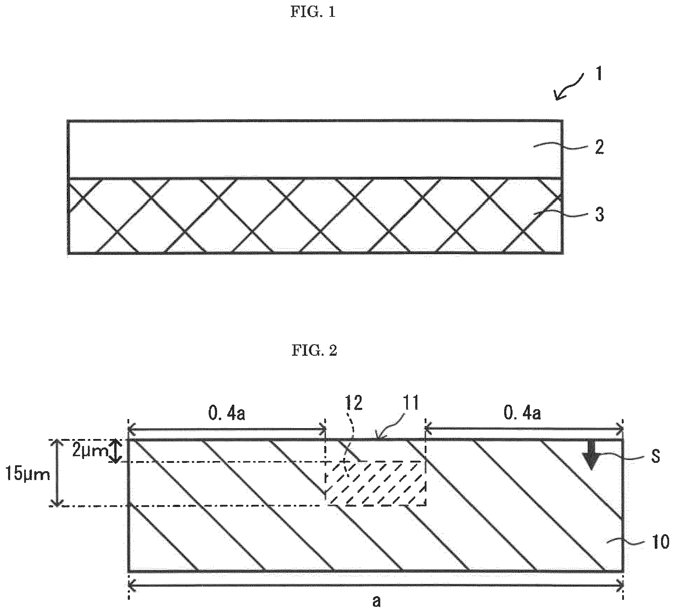

Figure 1 shows one embodiment of the diaphragm for alkaline water electrolysis of the present invention schematically. Reference number 1 represents a diaphragm for alkaline water electrolysis, Reference number 2 represents a single membrane layer, and Reference number 3 represents a support layer. The single membrane layer 2 contains the resin (R) and the inorganic particles, and the support layer 3 contains the resin (R), the inorganic particles and the porous support.

Examples of materials of the porous support include resin materials such as: polyethylene; polypropylene; polysulfone; polyethersulfone; polyphenylsulfone; polyarylene sulfide resins e.g. polyphenylene sulfide; polyketone; polyimide; polyetherimide; and fluorine resins. These may be used alone or in combination of two or more. Among them, in order to achieve excellent resistances to heat and alkali, the porous support preferably contains at least one resin selected from the group consisting of polypropylene, polyethylene and polyphenylene sulfide, more preferably contains at least one selected from the group consisting of polypropylene and polyphenylene sulfide.

Examples of forms of the porous support include a non-woven fabric, a woven fabric (a textile), a knitted item, a mesh, a porous membrane, felt, and a mixed fabric of a non-woven fabric with a woven fabric. The form of the porous support is preferably the non-woven fabric, woven fabric, mesh or felt, and more preferably the non-woven fabric, woven fabric or mesh.

Among them, the non-woven fabric, woven fabric, mesh or felt, each containing at least one resin selected from the group consisting of polypropylene, polyethylene and polyphenylene sulfide is preferable as the porous support. Further, the non-woven fabric, mesh or felt each containing polyphenylene sulfide is more preferable as the porous support. A total content of the polypropylene, polyethylene and polyphenylene sulfide in the porous support is preferably not less than 50 % by mass, more preferably not less than 70 % by mass, and further preferably not less than 90 % by mass.

In a case of a sheet-like porous support, a thickness of the porous support is not particularly limited as long as the diaphragm for alkaline water electrolysis of the present invention achieves the effects of the present invention, however, the porous support may have the thickness of, for example, preferably 30 to 2000 $\mu$m, more preferably 50 to 1000 $\mu$m, still more preferably 80 to 500 $\mu$m, and particularly preferably 80 to 250 $\mu$m.

In the diaphragm for alkaline water electrolysis of the present invention, the single membrane layer 2 may be formed on one or both of the surface(s) of the support layer 3.

Alternatively, the diaphragm for alkaline water electrolysis of the present invention may not have the single membrane layer 2, and may be a composite in which the inorganic particles, the resin (R) and the porous support are integrated with each other as the support layer 3. The diaphragm for alkaline water electrolysis in the form of the composite can have higher strength and toughness without a deterioration in ion permeability.

1-2 Inorganic particles

The diaphragm for alkaline water electrolysis of the present invention contains the inorganic particles. The diaphragm for alkaline water electrolysis of the present invention can exhibit ion permeability when openings between the inorganic particles and the organic polymer are filled with the electrolytic solution. Because the diaphragm for alkaline water electrolysis contains the inorganic particles, the diaphragm can be hydrophilic and can prevent oxygen gas and hydrogen gas generated in water electrolysis from adhering to the diaphragm to interrupt the electrolysis.

Examples of the inorganic particles used in the present invention include: hydroxides and oxides of magnesium, zirconium, titanium, zinc, aluminum, tantalum and the like; and sulfates of calcium, barium, lead, strontium and the like. Among them, since the even more excellent dispersibility and stability of the inorganic particles in the alkaline solution are obtained, magnesium hydroxide, zirconium hydroxide, titanium hydroxide, zirconium oxide, titanium oxide, calcium sulfate, or barium sulfate is preferable, and magnesium hydroxide, zirconium oxide, titanium oxide, or barium sulfate is more preferable. The inorganic particles may be used alone or in combination of two or more.

The inorganic particles may be natural substances or synthetic substances. The surface of the inorganic particles may be untreated, or may be surface-treated with a silane coupling agent, stearic acid, oleic acid, a phosphoric acid ester or the like. The shape of the inorganic particles is not particularly limited as long as it is in the form of particles, and may be any of irregular shapes; spherical shapes such as true spherical shapes and oblong spherical shapes; plate shapes such as flake shapes and hexagonal plate shapes; and fibrous shapes. Spherical shapes, plate shapes, or fibrous shapes are preferable because the dispersion in solvents is easy and a resin composition is easily prepared. The plate shapes are more preferable because ion permeability, particle retention and surface hydrophilicity of the diaphragm for alkaline water electrolysis can be increased.

The inorganic particles preferably have an aspect ratio of 1.0 to 8.0. The inorganic particles having the aspect ratio within the above-mentioned range can lead the diaphragm to have much better ion permeability and excellent uniformity. The aspect ratio is more preferably 1.5 to 7.0, still more preferably 2.0 to 6.0.

In the present specification, the aspect ratio means the ratio of the longest diameter <a> to the shortest diameter <b> (<a>/ <b>). The aspect ratio can be determined as follows: powdery inorganic particles are observed with SEM, arbitrary 10 particles in the observed image are analyzed with an analysis software or the like to determine each ratio of the longest diameter <a> to the shortest diameter <b> (<a>/<b>) of each particle, and the ratios are averaged to obtain a simple average as the aspect ratio of the particles.

As the longest diameter <a>, for example, in a case of the inorganic particle having the plate shape, a longest length of a plate face of the particle is used, and in a case of the inorganic particle having the fibrous shape, a length of a fiber is used. As the shortest diameter <b>, the shortest diameter of diameters each passing through a midpoint of the longest diameter <a> and perpendicular to the longest diameter is used. Further, as the shortest diameter <b>, for example, in the case of the inorganic particle having the plate shape, a thickness of the particle is used, and in the case of the inorganic particle having the fibrous shape, a diameter of the fiber is used. As the thickness of the particle and the diameter of the fiber, the thickness and the diameter each measuring at the midpoint of the longest diameter <a> are used, respectively.

The average particle size of the inorganic particles is preferably 0.01 to 2.0 $\mu$m, more preferably 0.05 to 1.0 $\mu$m, and still more preferably 0.08 to 0.7 $\mu$m, in terms of even more excellent dispersibility of the inorganic particles. The average particle size is a volume average particle size obtained by a particle size distribution measurement with a laser diffraction/scattering method. In the measurement, an inorganic particle dispersion liquid in which the inorganic particles are dispersed in a 0.2 % by mass of sodium hexametaphosphate aqueous solution is used. The volume average particle size means a median diameter (d50) in a volume-based particle size distribution. When the average particle size of the inorganic particles is within the above range, the diaphragm having excellent ion permeability and gas barrier properties can be obtained.

A specific surface area of the inorganic particles is preferably 5 to 35 m$^2$/g, more preferably 5.5 to 25 m$^2$/g, and further preferably 6 to 20 m$^2$/g, in terms of even more excellent ion permeability of the diaphragm. The specific surface area is a specific surface area measured by the BET method with liquid nitrogen on the powdery inorganic particles. Since ion paths are formed by the highly hydrophilic surface of the inorganic particles in the diaphragm for alkaline water electrolysis, the diaphragm can have even more excellent ion permeability, when the specific surface area of the inorganic particles is within the above range.

A content of the inorganic particles is preferably 30 to 95 % by mass in 100% by mass of the diaphragm for alkaline water electrolysis. When the content of the inorganic particles is in the above range, the elution of the inorganic component in the alkaline solution is suppressed even more, and the diaphragm having excellent ion permeability, gas barrier properties, heat resistance and alkali resistance can be obtained. The content of the above-mentioned inorganic particles is more preferably 32 to 92 % by mass, and further preferably 35 to 90 % by mass, in 100% by mass of the diaphragm for alkaline water electrolysis.

When the diaphragm for alkaline water electrolysis of the present invention does not contain the porous support, the content of the inorganic particles is preferably 60 to 95 % by mass, more preferably 65 to 92 % by mass, and further preferably 75 to 90 % by mass, in 100% by mass of the diaphragm for alkaline water electrolysis.

When the diaphragm for alkaline water electrolysis of the present invention contains the porous support, the content of the inorganic particles is preferably 30 to 50 % by mass, more preferably 32 to 48 % by mass, and further preferably 35 to 45 % by mass, in 100% by mass of the diaphragm for alkaline water electrolysis.


1-3 Average pore diameter


The diaphragm for alkaline water electrolysis in the present invention has pores with an average pore diameter of 0.05 $\mu$m to 0.6 $\mu$m in the following range in the cross-section perpendicular to the surface of the diaphragm. The range is located: with respect to a width <a> of the cross-section, $0.4 \times$ <a> or more away from both ends in the longitudinal direction of the cross-section toward the center; and between the positions located 2 $\mu$m and 15 $\mu$m away from the surface in the depth direction of the diaphragm. Each of the pores is defined by the area enclosed by the outside edge in the cross-section. When the average pore diameter is too large, the bubble point value of the diaphragm will decrease and the gas barrier properties will deteriorate. When the average pore diameter is too small, the ionic conductivity (ion permeability) of the diaphragm will deteriorate. Therefore, by setting the average pore diameter in the above range, it is possible to obtain the diaphragm for alkaline water electrolysis that has both higher ionic conductivity (ion permeability) and higher gas barrier properties.

The average pore diameter is preferably 0.1$\mu$m to 0.4$\mu$m, more preferably 0.1$\mu$m to 0.3$\mu$m.

More specifically, referring to FIG. 2, a cross section 10 is perpendicular to a surface 11 of a diaphragm for alkaline water electrolysis. A range 12 is located between positions located 2 $\mu$m and 15 $\mu$m away from the surface 11 of the diaphragm in a depth direction S, and with respect to a width <a> of the cross-section 10, $0.4 \times$ <a> or more away from both ends in a longitudinal direction of the cross-section 10 toward the center. The cross section in the range 12 is measured by FE-SEM (manufactured by JEOL Ltd., model number: JSM-7600F) to obtain a cross-section observation image (magnification: 10,000 times). The obtained cross-section observation image is divided into light and dark portions with an analysis software (Image-Pro Premier, manufactured by NIPPON ROPER K. K.). Based on the difference between the light and dark portions, outside edges are formed and each of areas enclosed by each of the outside edges is extracted as a pore. Here, the pore, as the area enclosed by the outside edge that is formed based on the difference between the light and dark portions in the image divided into the light and dark portions, is the pore surrounded with the inorganic particles or with the inorganic particles and the resin (R).

For each of the extracted pores, the average value of the lengths (diameters) of the line segments that each connects two points on a perimeter of the pore and pass through a gravity center is calculated to be a pore diameter of each pore. Further, a roundness of each extracted pore is calculated by the formula of "(total length of perimeter)$^2$ / ($4 \times \pi \times$ (area))". Values of the pore diameters of the pores having the roundness of 10 or less are added and calculated an arithmetic mean value to be the average pore diameter. Here, when the shape of the pore is a perfect circle, the roundness is 1. The roundness becomes the larger value as the shape of the pore goes away from the perfect circle.

In the diaphragm for alkaline water electrolysis of the present invention, even if the inorganic particles are present, when the average pore diameter is too small, the ionic conductivity (ion permeability) described below is reduced to about 1/10. When the pore diameter is too large, the bubble point value described below is reduced, and there is concern that the gas barrier properties deteriorate. Therefore, the appropriate average pore diameter is required for achieving both higher ionic conductivity (ion permeability) and higher gas barrier properties.

The diaphragm for alkaline water electrolysis of the present invention preferably further has an appropriate pore diameter distribution. In the diaphragm for alkaline water electrolysis of the present invention, a number ratio of large pores having a diameter of more than 0.6 $\mu$m to all of the pores is preferably 10% or less, more preferably 8% or less, and further preferably 5% or less. The large pores and all of the pores are extracted in the visual field observed by the SE-SEM (magnification: 10,000 times) in the range 12. The range 12 is located in the cross-section 10 perpendicular to the surface 11 of the diaphragm, and with respect to the width <a> of the cross-section 10, $0.4 \times$ <a> or more away from both ends in the longitudinal direction of the cross-section toward the center, and between the positions located 2 $\mu$m and 15 $\mu$m away from the surface 11 of the diaphragm in the depth direction S of the diaphragm. The large pores are identified by dividing the observation image obtained by the FE-SEM measurement into light and dark portions with the analysis software, by forming outside edges based on the difference between the light and dark portions, and by extracting each of areas enclosed by each of the outside edges as each of pores, similar to the average pore diameter calculation.

The surface of the diaphragm for alkaline water electrolysis (indicated by reference number 11 in FIG. 2 as a specific example) is not particularly limited, and may be, for example, the surface on the side of the single membrane layer 2, and may also be the surface on the side of the support layer 3, of the diaphragm for alkaline water electrolysis 1 shown in FIG. 1.

1-4 Porosity

The diaphragm for alkaline water electrolysis of the present invention has the porosity of 25 to 80 %. The porosity may be calculated with the following formula. A measured density value of the diaphragm is obtained by measuring with the method shown below. A calculated density value of the diaphragm is obtained by calculating on the basis of a density value (true density) of each component constituting the diaphragm and a composition ratio of the each component.

$$\text{Porosity (\%)} = [1 \cdot (\text{Measured density value}) / (\text{Calculated density value})] \times 100$$

The measured density value may be calculated by measuring a mass and a volume of a test piece cut out from an arbitrary place of the obtained diaphragm and by dividing the mass by the volume. The volume can be calculated with a length and a width of the test piece measured by a caliper, and a thickness of the test piece measured by the film thickness measuring method. The mass of the test piece can be measured by a precision balance with a decimal point of 4 digits, for the test piece whose volume is measured.

The porosity of the diaphragm for alkaline water electrolysis of the present invention is preferably 30 to 75 %, and more preferably 35 to 70 %. When the porosity is in the above range, the electrolytic solution is continuously filled in the openings in the diaphragm, so that the diaphragm can have excellent ion permeability and gas barrier properties.

1-5 Ionic conductivity

An ionic conductivity measured on the diaphragm can be used as an index of the ion permeability of the diaphragm. The ionic conductivity of the diaphragm for alkaline water electrolysis of the present invention can be measured and calculated by the method described in Examples. The ionic conductivity of the diaphragm for alkaline water electrolysis of the present invention is preferably more than 100 mS/cm. In this case, the electrolysis efficiency in alkaline water electrolysis can be increased.

1-6 Bubble Point Value

A bubble point value of the diaphragm for alkaline water electrolysis of the present invention can be measured with a liquid porosimeter (manufactured by Porous Materials Inc.). Specifically, it can be measured and calculated by the method described in Examples. The bubble point value of the diaphragm for alkaline water electrolysis of the present invention is preferably more than 300 kPa. In this case, the gas barrier properties of the diaphragm for alkaline water electrolysis can be enhanced.

1-7 Thickness

A thickness (also referred to as the film thickness) of the diaphragm for alkaline water electrolysis of the present invention can be obtained preferably by the measuring method described in <Film thickness> in Examples. The thickness of the diaphragm for alkaline water electrolysis of the present invention is not particularly limited, and may be appropriately selected depending on the size of equipment used, handling, or the like. In terms of the gas barrier properties, the ion permeability or strength of the diaphragm, the thickness of the diaphragm is preferably 50 to 2000 $\mu$m, more preferably 100 to 1000 $\mu$m, further preferably 100 to 500 $\mu$m, and most preferably 150 to 350 $\mu$m.

When the above-mentioned porous support is included in the diaphragm, the thickness of the diaphragm for alkaline water electrolysis of the present invention is preferably 50 to 2000 $\mu$m, more preferably 100 to 1000 $\mu$m, further preferably 100 to 500 $\mu$m, and most preferably 150 to 300 $\mu$m.

1-8 Surface pore size

In the diaphragm for alkaline water electrolysis of the present invention, a surface pore size (hereinafter, also referred to as "surface pore diameter") is preferably 0.01 to 0.8 $\mu$m, more preferably 0.03 to 0.5 $\mu$m, still more preferably

0.05 to 0.3 μm. When the surface pore size is in the above range, the even more excellent gas barrier properties are obtained.

The surface pore size can be measured and calculated by the method described in Examples. In the method described in Examples, the surface pore, as the area enclosed by the outside edge that is formed based on the difference between the light and dark portions in the image divided into the light and dark portions, is the surface pore surrounded any of with the inorganic particles, with the inorganic particles and the resin (R), and with the resins (R).

2. Method for producing diaphragm for alkaline water electrolysis

A method for producing the diaphragm for alkaline water electrolysis will be described. The method for producing the diaphragm for alkaline water electrolysis is not particularly limited, and known methods can be applied. Non-solvent-induced phase separation methods or vapor-induced phase separation methods are preferred in terms of suppressing the elution of the inorganic components in the alkaline solution and further in terms of efficiently production of the diaphragm for alkaline water electrolysis having excellent ion permeability and gas barrier properties.

Specifically, the method for producing the diaphragm for alkaline water electrolysis preferably includes the following steps (1) to (3).

(1) a step of preparing a dispersion liquid containing the inorganic particles and the solvents,
(2) a step of preparing a resin mixture liquid by mixing the dispersion liquid with the resin (R) as the organic polymer, and
(3) a step of forming the diaphragm with the resin mixture liquid.

Each step will be described below.

(1) Step of preparing dispersion liquid containing inorganic particles and solvent

In the production method, when the inorganic particles are mixed with the resin (R), solid inorganic particles may be mixed as it is, or a dispersion liquid (slurry) of the inorganic particles dispersed in solvents may be mixed. Preferably, the dispersion liquid (slurry) of the inorganic particles dispersed in the solvents is prepared before mix with the resin (R). The inorganic particles and the resin (R) can be mixed more homogeneously by preparing the dispersion liquid of the inorganic particles and then mixing with the resin (R). This allows to obtain the diaphragm for alkaline water electrolysis in which the inorganic components are homogeneously distributed and immobilized in the partition wall formed by the resin (R) and in which the elution of the inorganic components is more sufficiently suppressed. A dispersant may be added to the dispersion liquid.

A content of the inorganic particles in the dispersion liquid is preferably 20 to 70 % by mass, more preferably 30 to 65 % by mass, and further preferably 50 to 65 % by mass. In this case, the average pore diameter defined above of the finally obtained diaphragm can be easily controlled within the range of 0.05 μm to 0.6 μm, and the diaphragm for alkaline water electrolysis can have both higher ionic conductivity (ion permeability) and higher gas barrier properties.

The solvent for dispersing the inorganic particles is not particularly limited as long as it has properties of dissolving the resin (R) mixed later. Examples of the solvent include N-methyl-2-pyrrolidone, N,N-dimethyl acetamide, N,N-dimethylformamide, dimethyl sulfoxide, methyl ethyl ketone, and toluene. These solvents may be used alone or in combination of two or more. Among them, N-methyl-2-pyrrolidone is preferable in terms of good dispersibility of the inorganic particles. An amount of the solvent used for the inorganic particles in the dispersion liquid is preferably 50 parts by mass or more and less than 100 parts by mass, more preferably 50 parts by mass or more and 90 parts by mass or less, and further preferably 50 parts by mass or more and less than 80 parts by mass, with respect to 100 parts by mass of the inorganic particles. In this case, the average pore diameter defined above of the finally obtained diaphragm can be easily controlled within the range of 0.05 μm to 0.6 μm, and the diaphragm for alkaline water electrolysis can have both higher ionic conductivity (ion permeability) and higher gas barrier properties.

Examples of the dispersant include: water-soluble polymers such as polyvinylpyrrolidone, polyethylene glycol, ethylene glycol, polyethyleneimine, polyacrylic acid and dextran; cationic surfactants; anionic surfactants; and conventionally known pigment dispersants having functional groups such as carboxy groups, phosphoric acid groups and sulfonic acid groups. An amount of the dispersant for the solvent in the dispersion liquid is preferably more than 1 part by mass and 10 parts by mass or less, more preferably 1.2 parts by mass or more and 8 parts by mass or less, and further preferably 1.5 parts by mass or more and less than 5 parts by mass, with respect to 100 parts by mass of the solvent. In this case, it becomes possible to control and improve the particle diameter of the inorganic particles in the dispersion liquid and the dispersion stability of the inorganic particles in the step of forming the diaphragm, and the average pore diameter defined above of the finally obtained diaphragm can be easily controlled within the range of 0.05 μm to 0.6 μm, and the diaphragm for alkaline water electrolysis can have both higher ionic conductivity (ion permeability) and higher gas barrier properties.

The method of dispersing the inorganic particles in the solvent is not particularly limited, and known mixing/dispersing methods, for example, methods using a mixer, a ball mill, a jet mill, a disper, a sand mill, a roll mill, a pot mill, a bead mill, a paint shaker or the like may be applied.

The average particle size of the inorganic particles in the dispersion liquid is preferably 0.1 to 1.0 $\mu$m, more preferably 0.15 to 0.8 $\mu$m, and still more preferably 0.15 to 0.5 $\mu$m. The average particle size of the inorganic particles in the dispersion liquid is obtained from a particle size distribution measurement with a dynamic light scattering method, and specifically, the method described in Examples of (<Average particle size of inorganic particles in inorganic particle dispersion liquid>) may be used.

(2) Step of preparing resin mixture liquid by mixing dispersion liquid with resin (R) as organic polymer

A method of mixing the resin (R) as the organic polymer with the dispersion liquid prepared in the step (1) is not particularly limited as long as it can sufficiently mix the dispersion liquid and the resin (R). The resin (R) may be directly mixed with the dispersion liquid. Alternatively, a resin solution dissolving the resin (R) in a solvent may be previously prepared, and then, the resin solution and the dispersion liquid may be mixed. Among them, the method of preparing the resin solution and mixing the resin solution and the dispersion liquid is preferable because the inorganic particles and the resin (R) can be more uniformly dispersed and mixed.

The solvent used upon preparing the resin solution is not particularly limited as long as it has properties of dissolving the resin (R). Examples of the solvent include N-methyl-2-pyrrolidone, N,N-dimethylacetamide, N,N-dimethylformamide, dimethyl sulfoxide, methyl ethyl ketone, and toluene. Among them, the same solvent as the solvent used for the preparation of the dispersion liquid is preferable because the inorganic particles and the above resin (R) can be dispersed and mixed more uniformly.

A content of the resin (R) in the resin solution is preferably 5 to 50 % by mass, more preferably 10 to 45 % by mass, and further preferably 15 to 40 % by mass. Examples of the mixing method include the same method as the mixing/dispersing method described in step (1).

The dispersion liquid and the resin (R) are preferably mixed to contain the resin (R) of 10 to 40 parts by mass, more preferably 12 to 35 parts by mass, and still more preferably 15 to 33 parts by mass, with respect to 100 parts by mass of the inorganic particles. When the content ratio of the inorganic particles and the resin (R) is within the above range, the elution of the inorganic components from the obtained diaphragm for alkaline water electrolysis to the alkaline solution is suppressed even more. Further, it is possible to produce the diaphragm for alkaline water electrolysis having more excellent ion permeability, gas barrier properties, heat resistance and alkali resistance.

When the dispersion liquid of the inorganic particles and the resin solution including the resin (R) are mixed, a total content of the solvents in the dispersion liquid of the inorganic particles and in the resin solution including the resin (R) is preferably 30 to 75 % by mass, more preferably 35 to 70 % by mass, and further preferably 40 to 65 % by mass, with respect to 100 % by mass of the total mass of the dispersion liquid of the inorganic particles and the resin solution including the resin (R). In order to adjust the porosity of the diaphragm for alkaline water electrolysis to the preferable range, it is preferable to use the solvent in such the ratio.

Further, a compound that is soluble in both the solvent of the resin mixture liquid and the non-solvent of the resin (R) may be added to the resin mixture liquid as additives in order to adjust the average pore diameter of the diaphragm. Examples of the additives include: water-soluble polymers such as polyethylene glycol, polyethylene oxide, polyvinylpyrrolidone, polyethyleneimine, polyacrylic acid and dextran; surfactants; glycerin; organic compounds such as sugars; and inorganic compounds such as calcium chloride, magnesium chloride, and lithium chloride.

(3) Step of forming diaphragm with resin mixture liquid

The diaphragm is formed with the resin mixture liquid obtained in the step (2).

The method of forming the diaphragm preferably includes the following steps (3-a) and (3-b), because the diaphragm for alkaline water electrolysis in which the elution of the inorganic component in the alkaline solution is suppressed even more can be easily produced.

(3-a) a step of forming a coated film of the resin mixture liquid, and
(3-b) a step of solidifying the coated film by contacting the coated film with the non-solvent to obtain a porous film.

(3-a) Step of forming coated film of resin mixture liquid

Examples of the method of forming the coated film of the resin mixture liquid include a method of applying the resin mixture liquid obtained above onto a substrate, and a method of immersing a substrate into the resin mixture liquid to obtain the substrate impregnated with the resin mixture liquid. Among them, the method of applying the resin mixture liquid onto the substrate is preferable because the coated film can be easily formed.

The method of applying the resin mixture liquid onto the substrate is not particularly limited, and known coating methods, for example, coating methods such as die coating, spin coating, gravure coating, curtain coating, blade coating, knife coating, spray, applicator and bar coater, can be applied. It is preferable that the porous support is used as the substrate, because the pores of the surface of the diaphragm for alkaline water electrolysis become smaller, and the gas barrier properties can be enhanced even more while maintaining high ion permeability.

The substrate is not particularly limited as long as it can form the coated film by applying the resin mixture liquid. Examples of the substrate include: films and sheets made of resins such as polyethylene terephthalate, polyethylene naphthalate, polypropylene, polyethylene, polyvinyl chloride, polyvinyl acetal, polymethylmethacrylate and polycarbonate; and glass plates. Among them, polyethylene terephthalate is preferable because it is easy to handle and the raw material cost can be reduced.

Further, when the diaphragm for alkaline water electrolysis containing the above-mentioned porous support is produced, the porous support can be used as the substrate.

Further, when the diaphragm for alkaline water electrolysis is produced as a composite in which the porous support and the membrane containing the inorganic particles and the resin (R) are integrated, the resin mixture liquid may be coated onto the substrate, and the porous support may be placed on the coated liquid to impregnate the porous support with the coated liquid.

A coating amount of the resin mixture liquid is not particularly limited, and may be appropriately determined so that the diaphragm has a thickness capable of exhibiting the effects described above.

(3-b) Step of solidifying coated film by contacting coated film with non-solvent

By contacting the coated film with the non-solvent, the non-solvent diffuses into the coated film and the resin (R) which is not dissolved in the non-solvent is solidified. On the other hand, the solvent which is soluble in the non-solvent in the coated film elutes from the coated film. As the phase separation occurs in this way, the resin (R) (and the inorganic particles) is solidified to form the porous film.

Examples of the method of contacting the coated film with the non-solvent include a method of immersing the coated film in the non-solvent (coagulation bath) and a method of exposing the coated film to the non-solvent vapor atmosphere.

The non-solvent is not particularly limited as long as it has properties of not substantially dissolving the resin (R), and examples thereof include: ion-exchanged water; lower alcohols such as methanol, ethanol and isopropyl alcohol; and mixed solvent thereof. Among them, ion-exchanged water is preferable in terms of economy and waste liquid treatment. In addition to the components described above, the non-solvent may contain a small amount of the same solvent as the solvent contained in the coated film.

An amount of the non-solvent used is preferably 50 to 10000 parts by mass, more preferably 100 to 5000 parts by mass, and still more preferably 200 to 1000 parts by mass, with respect to 100 parts by mass of coated film, i.e., with respect to 100 parts by mass of the solid in the resin mixture liquid used for forming the coated film. It is preferable to use the non-solvent in such the ratio in terms of adjusting the porosity of the obtained porous film to the preferable range and completely extracting the solvent in the coated film into the non-solvent.

Further, in order to remove the non-solvent, the coated film solidified in the above step may be dried to obtain a porous film.

A drying temperature of the coated film is preferably 60 to 120 °C.

A drying time is preferably 0.5 to 120 minutes, more preferably 1 to 60 minutes, and still more preferably 1 to 30 minutes.

As described above, the diaphragm for alkaline water electrolysis of the present invention can be easily manufactured by the above steps (1) to (3).

3. Uses

The diaphragm for alkaline water electrolysis of the present invention achieves both higher ionic conductivity (ion permeability) and higher gas barrier properties. Therefore, the diaphragm for alkaline water electrolysis of the present invention can be suitably used as a diaphragm for water electrolysis using the alkaline aqueous solution as the electrolytic solution. Further, in addition to the above-mentioned diaphragm for alkaline water electrolysis, it can be used for: separators for cells such as separators for alkaline fuel cells, separators for primary batteries and separators for secondary batteries; separators for salt electrolysis; and the like.

4 . Alkaline water electrolysis device

The diaphragm for alkaline water electrolysis of the present invention is used as a member of an alkaline water electrolysis device. Examples of the alkaline water electrolysis device include a device including an anode, a cathode, and the diaphragm for alkaline water electrolysis arranged between the anode and the cathode. More specifically, the alkaline water electrolysis device has an anode chamber in which the anode is present and a cathode chamber in which the cathode is present. The anode chamber and the cathode chamber are separated by the diaphragm for alkaline water electrolysis.

Examples of the anode and the cathode include known electrodes such as conductive substrates containing nickel, nickel alloys, or the like.

5. Electrolysis method

The water electrolysis method with the alkaline water electrolysis device equipped with the diaphragm for alkaline water electrolysis of the present invention is not particularly limited, and known methods can be applied. For example, it can be carried out by filling the alkaline water electrolysis device equipped with the above-described diaphragm for alkaline water electrolysis of the present invention with the electrolytic solution and by applying an electric current to the electrolytic solution.

As the electrolytic solution, the alkaline aqueous solution in which the electrolyte such as potassium hydroxide and sodium hydroxide is dissolved is used. A concentration of the electrolyte in the electrolytic solution is not particularly limited, and is preferably 20 to 40 % by mass because the electrolysis efficiency can be improved even more.

A temperature for electrolysis is preferably 50 to 120 °C, and more preferably 80 to 90 °C, because the ionic conductivity (ion permeability) of the electrolytic solution can be further improved and the electrolysis efficiency can be improved even more. As the current application conditions, known conditions/methods may be used.

EXAMPLES

Hereinafter, the present invention will be described in more detail with reference to Examples, but the present invention is not limited to these Examples. In addition, "part" means "part by mass" and "%" means "% by mass" unless otherwise specified.

In these Examples, the measurement conditions of various physical properties are as follows.

<Average particle size of inorganic particles (powder)>

Inorganic particles (powder) and an aqueous solution of 0.2% by mass of sodium hexametaphosphate were mixed and they were dispersed with an ultrasonic cleaner, to obtain an inorganic particle dispersion liquid. A particle size distribution of the inorganic particle dispersion liquid was measuered by measuring a particle size distribution with a laser diffraction/scattering type particle size distribution analyzer (trade name: LA-920, manufactured by HORIBA Ltd.) to obtain a volume-based particle size distribution. A median diameter (d50) of the obtained volume-based particle size distribution was used as the average particle size ($\mu$m) of the inorganic particles.

<Specific surface area of inorganic particles>

A specific surface area of the inorganic particles was measured with a BET specific surface area meter (trade name: Macsorb HM model-1210, manufactured by Mountech Co., Ltd.). Specifically, the inorganic particles (powder) were charged into a cell as a measurement sample, and degassing at 200°C while flowing a nitrogen gas in the cell. After the degassing, the cell was immersed in a liquid nitrogen while flowing the nitrogen gas into the cell to adsorb nitrogen on the measurement sample at a temperature of -196°C. Next, the cell was kept at room temperature, and an amount of desorbed nitrogen was measured to obtain the specific surface area based on the BET method. The measurement was performed 3 times for each sample, and the average value was defined as the specific surface area ($m^2/g$) of the inorganic particles.

<Aspect ratio of inorganic particles>

The inorganic particle (powder) was observed with FE-SEM (trade name: JSM-7600F, manufactured by JEOL Ltd.) at a magnification of 20,000 to obtain an observation image. On arbitrary 10 particles in the obtained observation image, a ratio of the longest diameter <a> to the shortest diameter <b> (<a>/<b>) of each particle was measured with an analysis software (Image-Pro Premier, manufactured by NIPPON ROPER K. K.). An arithmetic mean of those ratios was calculated and used as the aspect ratio of the inorganic particles. As the longest diameter <a>, for example, in a case of the inorganic particle having the plate shape, a longest length of the plate face of the particle was used, and in a case of the inorganic particle having the fibrous shape, a length of the fiber was used. As the shortest diameter <b>, the shortest diameter of the diameters each passing through a midpoint of the longest diameter <a> and perpendicular to the longest diameter was used. Further, as the shortest diameter <b>, for example, in the case of the inorganic particle having the plate shape such as the flaky shape and the hexagonal plate shape, a thickness of the particle was used, and in the case of the inorganic particle having the fibrous shape, a diameter of the fiber was used. As the thickness of the particle and the diameter of the fiber, the thickness and the diameter each measuring at the midpoint of the longest diameter <a> were used, respectively.

<Average particle size of inorganic particles in inorganic particle dispersion liquid>

0.1 parts by mass of the obtained inorganic particle dispersion liquid was diluted with 2 parts by mass of a dispersion medium to prepare a diluted solution of the inorganic particle dispersion liquid. The particle diameter of the inorganic particles dispersed in the diluted solution was measured with a particle size distribution analyzer (trade name: FPAR-1000, manufactured by Otsuka Electronics Co., Ltd.) based on a dynamic light scattering method, and analyzed based on Cumulant method to obtain an average particle size. The obtained average particle size was used as the average particle size of the inorganic particles in the inorganic particle dispersion liquid.

<Film Thickness>

A thickness of the obtained diaphragm for alkaline water electrolysis was measured by a Digimatic micrometer (manufactured by Mitutoyo Corp.). Arbitrary 10 points were measured, and an average value of the measured values was used as the film thickness.

<Porosity>

A porosity of the obtained diaphragm for alkaline water electrolysis was calculated with the following formula. A measured density value of the diaphragm was obtained by measuring with the method shown below. A calculated density value of the diaphragm was obtained by calculating on the basis of a density value (true density) of each component constituting the diaphragm and a composition ratio of the each component.

$$\text{Porosity (\%)} = [1 \cdot (\text{Measured density value}) / (\text{Calculated density value})] \times 100$$

The measured density value was calculated by measuring a mass and a volume of a test piece cut out from an arbitrary place of the obtained diaphragm and by dividing the mass by the volume. The volume was calculated with a length and a width of the test piece measured by a caliper, and a thickness of the test piece measured by the film thickness measuring method mentioned-above. The mass of the test piece was measured, by using a precision balance with a decimal point of 4 digits, for the test piece whose volume is measured.

< Average pore diameter >

A cross-section observation image (magnification: 10,000 times) was obtained by measuring with FE-SEM (manufactured by JEOL Ltd., model number: JSM-7600F) in the following range in the cross-section perpendicular to a surface of the obtained diaphragm for alkaline water electrolysis. The range was located: with respect to a width <a> of the cross-section, $0.4 \times$ <a> or more away from both ends in a longitudinal direction of the cross-section toward a center; and between positions located 2 $\mu$m and 15 $\mu$m away from the surface in a depth direction of the diaphragm. The obtained cross-section observation image was divided into light and dark portions with the analysis software (Image-Pro Premier, manufactured by NIPPON ROPER K. K.). Based on the difference between the light and dark portions, outside edges were formed and each of areas enclosed by each of the outside edges was extracted as each of the pores. For each of the extracted pores, the average value of the lengths (diameters) of the line segments that each connects two points on a perimeter of the pore and pass through the gravity center was calculated to obtain the pore diameter of each pore. The roundness of each of the extracted pores was calculated with the formula of "(total length of perimeter)$^2$ / ($4 \times \pi \times$ (area))". When the shape of the pore is a perfect circle, the roundness is 1. The roundness becomes the larger value as the shape of the pore goes away from the perfect circle. Values of the pore diameters of the pores having the roundness of 10 or less were added and calculated an arithmetic mean value to obtain the average pore diameter.

< Ratio of large pores >

In a cross-section perpendicular to the surface of the obtained diaphragm, the pore diameter of the each pore was calculated in the same manner as the average pore diameter calculation. Further, the total number of the obtained pores and the number of the pores having the diameter of more than 0.6 $\mu$m obtained were measured, and then, a ratio was calculated as a ratio of large pores with the following formula:

$$\text{(Number of pores having pore diameter of more than 0.6 μm) / (Total number of obtained pores)}$$

<Ionic conductivity>

A cell was formed with the following cell configuration and left standing in a constant temperature bath at 25°C for 30 minutes. After that, AC impedance measurement was performed under the following measurement conditions to obtain an intercept component (Ra). Further, an intercept component (Rb) without the sample was also obtained. An ionic conductivity was calculated as an average value of two measurement points by the following formula with the obtained intercept component (Ra), the intercept component (Rb), and the film thickness obtained by the above film thickness measurement method.

$$[\text{Ionic conductivity (mS/cm)}] = [\text{film thickness (cm)}] \div [(\text{Ra-Rb}) \times 1000 \times 1.77]$$

(Measurement conditions)

- Cell configuration

    Working electrode: Ni plate
    Counter electrode: Ni plate
    Electrolytic solution: 30% by mass of potassium hydroxide aqueous solution
    Sample pretreatment: Immersed in the above electrolytic solution overnight
    Measurement effective area: 1.77 cm$^2$

- AC impedance measurement conditions

    Applied voltage: 10 mV vs. Open circuit voltage
    Frequency range: 100 kHz to 100 Hz

<Bubble point value>

With respect to the obtained diaphragm for alkaline water electrolysis, a bubble point value was measured with a liquid porosimeter (manufactured by Porous Materials Inc.). Specifically, the 2.5 cm$\varphi$ of diaphragm was immersed in an ion-exchanged water at room temperature for 1 hour to be sufficiently wet, and then, the fluorine-containing solvent of Galwick (manufactured by Porous Materials Inc.) was filled on the diaphragm. A gas pressure against the diaphragm was increased to destroy the liquid film of the water, and a gas pressure at the time when Galwick passed through the diaphragm and its weight was observed with a balance was taken as the bubble point value.

<Surface pore diameter>

In the surface of the obtained diaphragm for alkaline water electrolysis, a surface observation image (magnification: 5,000 times) was obtained by measuring with FE-SEM (manufactured by JEOL Ltd., model number: JSM-7600F). The obtained surface observation image was divided into light and dark portions with the analysis software (Image-Pro Premier, manufactured by NIPPON ROPER K. K.). Based on the difference between the light and dark portions, outside edges were formed and each of areas enclosed by each of the outside edges was extracted as each of surface pores. For each of the extracted surface pores, an average value of lengths (diameters) of line segments that each connects two points on a perimeter of the surface pore and pass through a gravity center was calculated to obtain a pore diameter of each surface pore. The values of the pore diameters of each of the surface pores were added and calculated an arithmetic mean value to obtain a surface pore diameter.

[Example 1]

200 parts by mass of magnesium hydroxide particles (plate shapes, average particle size: 0.36 $\mu$m, specific surface area: 10 m$^2$/g, aspect ratio: 4.7, true density: 2.36 g/cm$^3$), 150 parts by mass of N-methyl-2-pyrrolidone (manufactured by Mitsubishi Chemical Corp.) and 5 parts by mass of polyvinylpyrrolidone as a dispersant were mixed. The mixture was dispersed for 30 minutes by a bead mill with zirconia beads, and then, by removing the zirconia beads, a magnesium hydroxide particle dispersion liquid was obtained. The average particle size of the magnesium hydroxide particles in the obtained magnesium hydroxide particle dispersion liquid was 280 nm.

200 parts by mass of the obtained magnesium hydroxide particle dispersion liquid and 100 parts by mass of a polysulfone resin solution were measured. The polysulfone resin solution was obtained by heat-dissolving polysulfone resin (trade name: Ultrazone S3010, manufactured by BASF Japan Ltd., true density: 1.24 g/cm$^3$) in N-methyl-2-pyrrolidone (manufactured by Wako Pure Chemical Industries, Ltd.) at 80 to 100°C to have a concentration of 35% by mass of polysulfone resin. The measured magnesium hydroxide particle dispersion liquid and polysulfone resin solution were mixed with a planetary centrifugal mixer (trade name: Awatori Rentaro (THINKYMIXER) ARE-500, manufactured by THINKY Corp.) at room temperature at a rotation speed of 1000 min$^{-1}$ for about 10 minutes and filtered to obtain a film forming composition.

The film forming composition was coated on a polyethylene terephthalate (PET) film with an applicator so that the thickness after drying was 200 $\mu$m, to obtain a coated film. A non-woven fabric (basis weight: 100 g/m$^2$, thickness: 190 $\mu$m) made of polyphenylene sulfide fiber (true density: 1.34 g/cm$^3$) was contacted on the coated film to be completely impregnated with the film forming composition in the non-woven fabric. Thereafter, the non-woven fabric impregnated with the film forming composition was bathed in a water bath at room temperature for 10 minutes to solidify the coated film, and then, the coated film was peeled off together with the non-woven fabric from the PET film in water to obtain a water-containing film made of the magnesium hydroxide particles, the polysulfone resin and the non-woven fabric. The obtained film was dried at 80°C for 30 minutes with a drier to obtain a diaphragm for alkaline water electrolysis.

In the obtained diaphragm for alkaline water electrolysis, the thickness was 240 $\mu$m, the porosity was 52%, the average pore diameter was 0.15 $\mu$m, the ratio of large pores was 2.5%, the ionic conductivity was 120 mS/cm, the bubble point value was 740 kPa, and the surface pore diameter was 0.66 $\mu$m.

[Example 2]

200 parts by mass of barium sulfate particles (plate shapes, average particle size: 0.47 $\mu$m, specific surface area: 8 m$^2$/g, aspect ratio: 6.4, true density: 4.5 g/cm$^3$), 150 parts by mass of N-methyl-2-pyrrolidone (manufactured by Mitsubishi Chemical Corp.) and 5 parts by mass of polyvinylpyrrolidone as a dispersant were mixed. The mixture was dispersed for 30 minutes by a bead mill with zirconia beads, and then, by removing the zirconia beads, a barium sulfate particle dispersion liquid was obtained. The average particle size of the barium sulfate particles in the obtained barium sulfate particle dispersion liquid was 360 nm.

200 parts by mass of the obtained barium sulfate particle dispersion liquid and 100 parts by mass of a polysulfone resin solution were measured. The polysulfone resin solution was obtained by heat-dissolving polysulfone resin (trade name: Ultrazone S3010, manufactured by BASF Japan Ltd., true density: 1.24 g/cm$^3$) in N-methyl-2-pyrrolidone (manufactured by Mitsubishi Chemical Corp.) at 80 to 100°C to have a concentration of 35% by mass of polysulfone resin. The measured barium sulfate particle dispersion liquid and polysulfone resin solution were mixed with a planetary centrifugal mixer (trade name: Awatori Rentaro (THINKYMIXER) ARE-500, manufactured by THINKY Corp.) at room temperature at a rotation speed of 1000 min$^{-1}$ for about 10 minutes and filtered to obtain a film forming composition.

The film forming composition was coated on a polyethylene terephthalate (PET) film with an applicator so that the thickness after drying was 200 $\mu$m, to obtain a coated film. A non-woven fabric (basis weight: 100 g/m$^2$, thickness: 190 $\mu$m) made of polyphenylene sulfide fiber (true density: 1.34 g/cm$^3$) was contacted on the coated film to be completely impregnated with the film forming composition in the non-woven fabric. Thereafter, the non-woven fabric impregnated with the film forming composition was bathed in a water bath at room temperature for 10 minutes to solidify the coated film, and then the coated film was peeled off together with the non-woven fabric from the PET film in water to obtain a water-containing film made of the barium sulfate particles, the polysulfone resin and the non-woven fabric. The obtained film was dried at 80°C for 30 minutes with a drier to obtain a diaphragm for alkaline water electrolysis.

In the obtained diaphragm for alkaline water electrolysis, the thickness was 235 $\mu$m, the porosity was 51%, the average pore diameter was 0.22 $\mu$m, the ratio of large pores was 4.8%, the ionic conductivity was 140 mS/cm, the bubble point value was 610 kPa, and the surface pore diameter was 0.72 $\mu$m.

[Example 3]

A diaphragm for alkaline water electrolysis was obtained in the same manner as Example 1 except that the magnesium hydroxide particles were replaced by zirconium oxide particles (spherical shapes, average particle size: 0.04 $\mu$m, specific surface area: 20 m$^2$/g, aspect ratio: 1.1, true density: 5.68 g/cm$^3$). In this example, the average particle size of the zirconium oxide particles in the zirconium oxide particle dispersion liquid was 320 nm.

In the obtained diaphragm for alkaline water electrolysis, the thickness was 230 $\mu$m, the porosity was 49%, the average pore diameter was 0.35 $\mu$m, the ratio of large pores was 6.9%, the ionic conductivity was 130 mS/cm, the bubble point value was 470 kPa, and the surface pore diameter was 0.85 $\mu$m.

[Comparative Example 1]

200 parts by mass of magnesium hydroxide particles (plate shapes, average particle size: 0.36 $\mu$m, specific surface area: 10 m$^2$/g, aspect ratio: 4.7, true density: 2.36 g/cm$^3$), 200 parts by mass of N-methyl-2-pyrrolidone (manufactured by Mitsubishi Chemical Corp.) and 2 parts by mass of polyvinylpyrrolidone as a dispersant were mixed. The mixture was dispersed for 30 minutes by a bead mill with zirconia beads, and then, by removing the zirconia beads, a magnesium hydroxide particle dispersion liquid was obtained. The average particle size of the magnesium hydroxide particles in the obtained magnesium hydroxide particle dispersion liquid was 410 nm.

200 parts by mass of the obtained magnesium hydroxide particle dispersion liquid and 100 parts by mass of a polysulfone resin solution were measured. The polysulfone resin solution was obtained by heat-dissolving polysulfone resin (trade name: Ultrazone S3010, manufactured by BASF Japan Ltd., true density: 1.24 g/cm$^3$) in N-methyl-2-pyrrolidone (manufactured by Wako Pure Chemical Industries, Ltd.) at 80 to 100°C to have a concentration of 35% by mass of polysulfone resin. The measured magnesium hydroxide particle dispersion liquid and polysulfone resin solution were mixed with planetary centrifugal mixer (trade name: Awatori Rentaro (THINKYMIXER) ARE-500, manufactured by THINKY Corp.) at room temperature at a rotation speed of 1000 min$^{-1}$ for about 10 minutes and filtered to obtain a film forming composition.

The film forming composition was coated on a polyethylene terephthalate (PET) film with an applicator so that the thickness after drying was 200 $\mu$m, to obtain a coated film. A non-woven fabric (basis weight: 100 g/m$^2$, thickness: 190 $\mu$m) made of polyphenylene sulfide fiber (true density: 1.34 g/cm$^3$) was contacted on the coated film to be completely impregnated with the film forming composition in the non-woven fabric. Thereafter, the non-woven fabric impregnated with the film forming composition was bathed in a water bath at room temperature for 10 minutes to solidify the coated film, and then the coated film was peeled off together with the non-woven fabric from the PET film in water to obtain a water-containing film made of the magnesium hydroxide particles, the polysulfone resin and the non-woven fabric. The obtained film was dried at 80°C for 30 minutes with a drier to obtain a diaphragm for alkaline water electrolysis.

In the obtained diaphragm for alkaline water electrolysis, the thickness was 220 $\mu$m, the porosity was 55%, the average pore diameter was 0.62 $\mu$m, the ratio of large pores was 8.2%, the ionic conductivity was 100 mS/cm, the bubble point value was 260 kPa, and the surface pore diameter was 0.92 $\mu$m.

[Comparative Example 2]

200 parts by mass of magnesium hydroxide particles (plate shapes, average particle size: 0.36 $\mu$m, specific surface area: 10 m$^2$/g, aspect ratio: 4.7, true density: 2.36 g/cm$^3$), 150 parts by mass of N,N-dimethylformamide (manufactured by FUJI FILM Wako Pure Chemical Corp.) and 5 parts by mass of polyvinylpyrrolidone as a dispersant were mixed. The mixture was dispersed for 30 minutes by a bead mill with zirconia beads, and then, by removing the zirconia beads, a magnesium hydroxide particle dispersion liquid was obtained. The average particle size of the magnesium hydroxide particles in the obtained magnesium hydroxide particle dispersion liquid was 293 nm.

200 parts by mass of the obtained magnesium hydroxide particle dispersion liquid, 120 parts by mass of a polysulfone resin solution were measured. The polysulfone resin solution was obtained by heat-dissolving polysulfone resin (trade name: Ultrazone S3010, manufactured by BASF Japan Ltd., true density: 1.24 g/cm$^3$) in N,N-dimethylformamide (manufactured by FUJI FILM Wako Pure Chemical Corp.) at 80 to 100°C to have a concentration of 30% by mass of polysulfone resin. The measured magnesium hydroxide particle dispersion liquid and polysulfone resin solution were mixed with a planetary centrifugal mixer (trade name: Awatori Rentaro (THINKYMIXER) ARE-500, manufactured by THINKY Corp.) at room temperature at a rotation speed of 1000 min$^{-1}$ for about 10 minutes and filtered to obtain a film forming composition.

A film forming composition was coated on a polyethylene terephthalate (PET) film with an applicator so that the coating amount was 300 g/m$^2$, to obtain a coated film. A non-woven fabric (basis weight: 100 g/m$^2$, thickness: 200 $\mu$m) made of polyphenylene sulfide fiber (true density: 1.34 g/cm$^3$) was contacted on the coated film to be completely impregnated with the film forming composition in the non-woven fabric. Thereafter, the non-woven fabric impregnated with the film forming composition was dried at 120°C for 30 minutes in a drier, and then the coated film was peeled off together with the non-woven fabric from the PET film to obtain a film made of the magnesium hydroxide particles, the polysulfone resin and the non-woven fabric. The film was dried at 150°C for 60 minutes in a drier in order to remove the residual solvent of the obtained film, and a diaphragm for alkaline water electrolysis was obtained.

In the obtained diaphragm for alkaline water electrolysis, the thickness was 221 $\mu$m, the porosity was 16%, the average pore diameter was 0.08 $\mu$m, the ratio of large pores was 0.0%, the ionic conductivity was 18 mS/cm, the bubble point value was an upper limit of measurement of 1000 kPa or more, and the surface pore diameter was 0.01 $\mu$m.

[Comparative Example 3]

A magnesium hydroxide particle dispersion liquid was obtained in the same manner as Example 1. The average particle size of the magnesium hydroxide particles in the obtained magnesium hydroxide particle dispersion liquid was 280 nm.

200 parts by mass of the obtained magnesium hydroxide particle dispersion liquid, 120 parts by mass of a polysulfone resin solution, and 155 parts by mass of N-methyl-2-pyrrolidone (manufactured by Mitsubishi Chemical Corp.) were measured. The polysulfone resin solution was obtained by heat-dissolving polysulfone resin (trade name: Ultrazone S3010, manufactured by BASF Japan Ltd., true density: 1.24 g/cm³) in N-methyl-2-pyrrolidone (manufactured by Mitsubishi Chemical Corp.) at 80 to 100°C to have a concentration of 30% by mass of polysulfone resin. The measured magnesium hydroxide particle dispersion liquid, polysulfone resin solution, and N-methyl-2-pyrrolidone were mixed with a planetary centrifugal mixer (trade name: Awatori Rentaro (THINKYMIXER) ARE-500, manufactured by THINKY Corp.) at room temperature at a rotation speed of 1000 min⁻¹ for about 10 minutes and filtered to obtain a film forming composition.

The film forming composition was coated on a polyethylene terephthalate (PET) film with an applicator so that the coating amount was 350 g/m², to obtain a coated film. A non-woven fabric (basis weight: 44 g/m², thickness: 87 $\mu$m) made of polyphenylene sulfide fiber (true density: 1.34 g/cm³) was contacted on the coated film to be completely impregnated with the film forming composition in the non-woven fabric. Thereafter, the non-woven fabric impregnated with the film forming composition was bathed in a water bath at room temperature for 10 minutes to solidify the coated film, and then the coated film was peeled off together with the non-woven fabric from the PET film in water to obtain a water-containing film made of the magnesium hydroxide particles, the polysulfone resin and the non-woven fabric. The obtained film was dried at 80°C for 30 minutes with a drier to obtain a diaphragm for alkaline water electrolysis.

In the obtained diaphragm for alkaline water electrolysis, the thickness was 230 $\mu$m, the porosity was 82%, the average pore diameter was 0.41 $\mu$m, the ratio of large pores was 10.9%, the ionic conductivity was 42 mS/cm, the bubble point value was 280 kPa, and the surface pore diameter was 0.64 $\mu$m.

[Comparative Example 4]

200 parts by mass of zirconium oxide particles (spherical shapes, average particle size: 0.04 $\mu$m, specific surface area: 20 m²/g, aspect ratio: 1.1, true density: 5.68 g/cm³), 120 parts by mass of N-methyl-2-pyrrolidone (manufactured by Mitsubishi Chemical Corp.) and 16 parts by mass of a dispersant (trade name: DISPERBYK-180, manufactured by BYK-Chemie GmbH) are mixed. The mixture was dispersed for 60 minutes by a bead mill with zirconia beads, and then, by removing the zirconia beads, a zirconium oxide particle dispersion liquid was obtained. The average particle size of the zirconium oxide particles in the obtained zirconium oxide particle dispersion liquid was 83 nm.

200 parts by mass of the obtained zirconium oxide particle dispersion liquid and 24 parts by mass of a polysulfone resin solution were measured. The polysulfone resin solution was obtained by heat-dissolving polysulfone resin (trade name: Ultrazone S3010, manufactured by BASF Japan Ltd., true density: 1.24 g/cm³) in N-methyl-2-pyrrolidone (manufactured by Mitsubishi Chemical Corp.) at 80 to 100°C to have a concentration of 35% by mass of polysulfone resin. The measured zirconium oxide particle dispersion liquid and polysulfone resin solution were mixed with a planetary centrifugal mixer (trade name: Awatori Rentaro (THINKYMIXER) ARE-500, manufactured by THINKY Corp.) at room temperature at a rotation speed of 1000 min⁻¹ for about 10 minutes and filtered to obtain a film forming composition.

The film forming composition was coated on a polyethylene terephthalate (PET) film with an applicator so that the coating amount was 190 g/m², to obtain a coated film. A non-woven fabric (unit weight: 100 g/m², thickness: 200 $\mu$m) made of polyphenylene sulfide fiber (true density: 1.34 g/cm³) was contacted on the coated film to be completely impregnated with the film forming composition in the non-woven fabric. Thereafter, the non-woven fabric impregnated with the film forming composition was bathed in a water bath at room temperature for 10 minutes to solidify the coated film, and then the coated film was peeled off together with the non-woven fabric from the PET film in water to obtain a water-containing film composed of the zirconium oxide particles, the polysulfone resin and the non-woven fabric. The obtained film was dried at 80°C for 30 minutes with a drier to obtain a diaphragm for alkaline water electrolysis.

In the obtained diaphragm for alkaline water electrolysis, the thickness was 210 $\mu$m, the porosity was 36%, the average pore diameter was 0.04 $\mu$m, the ratio of large pores was 7.4%, the ionic conductivity was 68 mS/cm, the bubble point value was 680 kPa, and the surface pore diameter was 1.12 $\mu$m.

[Example 4]

200 parts by mass of magnesium hydroxide particles (plate shapes, average particle size: 0.25 $\mu$m, specific surface area: 18 $m^2$/g, aspect ratio: 5.9, true density: 2.36 g/$cm^3$), 150 parts by mass of N-methyl-2-pyrrolidone (manufactured by Mitsubishi Chemical Corp.) and 5 parts by mass of a dispersant (trade name: DISPERBYK-180, manufactured by BYK-Chemie GmbH) were mixed. The mixture was dispersed for 30 minutes by a bead mill with zirconia beads, and then, by removing the zirconia beads, a magnesium hydroxide particle dispersion liquid was obtained. The average particle size of the magnesium hydroxide particles in the obtained magnesium hydroxide particle dispersion liquid was 230 nm.

200 parts by mass of the obtained magnesium hydroxide particle dispersion liquid, 80 parts by mass of a polysulfone resin solution were measured. The polysulfone resin solution was obtained by heat-dissolving polysulfone resin (trade name: Ultrazone S3010, manufactured by BASF Japan Ltd., true density: 1.24 g/$cm^3$) in N-methyl-2-pyrrolidone (manufactured by Mitsubishi Chemical Corp.) at 80 to 100°C to have a concentration of 35% by mass of polysulfone resin. The measured magnesium hydroxide particle dispersion liquid and polysulfone resin solution were mixed with a planetary centrifugal mixer (trade name: Awatori Rentaro (THINKYMIXER) ARE-500, manufactured by THINKY Corp.) at room temperature at a rotation speed of 1000 $min^{-1}$ for about 10 minutes and filtered to obtain a film forming composition.

The obtained film forming composition was coated on a non-woven fabric (weight per unit area: 100 g/$m^2$, thickness: 200 $\mu$m) made of polyphenylene sulfide fiber (true density: 1.34 g/$cm^3$) with a knife coater so that the coating amount was 220 g/$m^2$, and the non-woven fabric was completely impregnated with the film forming composition. Thereafter, the non-woven fabric impregnated with the film forming composition was bathed in a water bath at room temperature for 5 minutes to remove the solvent and to coagulate, and then the residual solvent was removed by washing with water to obtain a water-containing film made of the magnesium hydroxide particles, the polysulfone resin and the non-woven fabric. The obtained film was dried at 80° C for 20 minutes with a drier to obtain a diaphragm for alkaline water electrolysis.

In the obtained diaphragm for alkaline water electrolysis, the thickness was 245 $\mu$m, the porosity was 48%, the average pore diameter was 0.16 $\mu$m, the ratio of large pores was 0.0%, the ionic conductivity was 148 mS/cm, the bubble point value was an upper limit of measurement of 1000 kPa or more, and the surface pore diameter was 0.10 $\mu$m.

[Example 5]

200 parts by mass of magnesium hydroxide particles (plate shapes, average particle size: 0.88 $\mu$m, specific surface area: 5.5 $m^2$/g, aspect ratio: 3.8, true density: 2.36 g/$cm^3$), 120 parts by mass of N-methyl-2-pyrrolidone (manufactured by Mitsubishi Chemical Corp.) and 3 parts by mass of a dispersant (trade name: DISPERBYK-180, manufactured by BYK-Chemie GmbH) were mixed. The mixture was dispersed for 30 minutes by a bead mill with zirconia beads, and then, by removing the zirconia beads, a magnesium hydroxide particle dispersion liquid was obtained. The average particle size of the magnesium hydroxide particles in the obtained magnesium hydroxide particle dispersion liquid was 840 nm.

200 parts by mass of the obtained magnesium hydroxide particle dispersion liquid and 60 parts by mass of a polysulfone resin solution were measured. The polysulfone resin solution was obtained by heat-dissolving polysulfone resin (trade name: Ultrazone S3010, manufactured by BASF Japan Ltd., true density: 1.24 g/$cm^3$) in N-methyl-2-pyrrolidone (manufactured by Mitsubishi Chemical Corp.) at 80 to 100°C to have a concentration of 35% by mass of polysulfone resin. The measured magnesium hydroxide particle dispersion liquid and polysulfone resin solution were mixed with a planetary centrifugal mixer (trade name: Awatori Rentaro (THINKYMIXER) ARE-500, manufactured by THINKY Corp.) at room temperature at a rotation speed of 1000 $min^{-1}$ for about 10 minutes and filtered to obtain a film forming composition.

The obtained film forming composition was coated on a non-woven fabric (weight per unit area: 100 g/$m^2$, thickness: 200 $\mu$m) made of polyphenylene sulfide fiber (true density: 1.34 g/$cm^3$) with a knife coater so that the coating amount was 200 g/$m^2$, and the non-woven fabric was completely impregnated with the film forming composition. Thereafter, the non-woven fabric impregnated with the film forming composition was bathed in a water bath at room temperature for 5 minutes to remove the solvent and to coagulate, and then the residual solvent is removed by washing with water to obtain a water-containing film made of the magnesium hydroxide particles, the polysulfone resin and the non-woven fabric. The obtained film was dried at 80° C for 20 minutes with a drier to obtain a diaphragm for alkaline water electrolysis.

In the obtained diaphragm for alkaline water electrolysis, the thickness was 252 $\mu$m, the porosity was 31%, the average pore diameter was 0.38 $\mu$m, the ratio of large pores was 3.2%, the ionic conductivity was 104 mS/cm, the bubble point value was 710 kPa, and the surface pore diameter was 0.46 $\mu$m.

[Example 6]

200 parts by mass of zirconium oxide particles (spherical shapes, average particle size: 0.04 $\mu$m, specific surface area: 20 m$^2$/g, aspect ratio: 1.1, true density: 5.68 g/cm$^3$), 120 parts by mass of N-methyl-2-pyrrolidone (manufactured by Mitsubishi Chemical Corp.) and 16 parts by mass of a dispersant (trade name: DISPERBYK-180, manufactured by BYK-Chemie GmbH) were mixed. The mixture was dispersed for 60 minutes by a bead mill with zirconia beads, and then, by removing the zirconia beads, a zirconium oxide particle dispersion liquid was obtained. The average particle size of the zirconium oxide particles in the obtained zirconium oxide particle dispersion liquid was 83 nm.

200 parts by mass of the obtained zirconium oxide particle dispersion liquid, 50 parts by mass of a polysulfone resin solution, and 35 parts by mass of N-methyl-2-pyrrolidone (manufactured by Mitsubishi Chemical Corp.) were measured. The polysulfone resin solution was obtained by heat-dissolving polysulfone resin (trade name: Ultrazone S3010, manufactured by BASF Japan Ltd., true density: 1.24 g/cm$^3$) in N-methyl-2-pyrrolidone (manufactured by Mitsubishi Chemical Corp.) at 80 to 100°C to have a concentration of 35% by mass of polysulfone resin. The measured zirconium oxide particle dispersion liquid, polysulfone resin solution and N-methyl-2-pyrrolidone were mixed with a planetary centrifugal mixer (trade name: Awatori Rentaro (THINKYMIXER) ARE-500, manufactured by THINKY Corp.) at room temperature at a rotation speed of 1000 min$^{-1}$ for about 10 minutes and filtered to obtain a film forming composition.

The obtained film forming composition was coated on a non-woven fabric (weight per unit area: 100 g/m$^2$, thickness: 200 $\mu$m) made of polyphenylene sulfide fiber (true density: 1.34 g/cm$^3$) with a knife coater so that the coating amount was 230 g/m$^2$, and the non-woven fabric was completely impregnated with the film forming composition. Thereafter, the non-woven fabric impregnated with the film forming composition was bathed in a water bath at room temperature for 5 minutes to remove the solvent and to coagulate, and then the residual solvent was removed by washing with water to obtain a water-containing film made of the zirconium oxide particles, the polysulfone resin and the non-woven fabric. The obtained film was dried at 80°C for 20 minutes with a drier to obtain a diaphragm for alkaline water electrolysis.

In the obtained diaphragm for alkaline water electrolysis, the thickness was 247 $\mu$m, the porosity was 46%, the average pore diameter was 0.29 $\mu$m, the ratio of large pores was 8.2%, the ionic conductivity was 131 mS/cm, the bubble point value was 420 kPa, and the surface pore diameter was 0.54 $\mu$m.

[Example 7]

200 parts by mass of magnesium hydroxide particles (plate shapes, average particle size: 0.88 $\mu$m, specific surface area: 5.5 m$^2$/g, aspect ratio: 3.8, true density: 2.36 g/cm$^3$), 120 parts by mass of N-methyl-2-pyrrolidone (manufactured by Mitsubishi Chemical Corp.), and 3 parts by mass of a dispersant (trade name: DISPERBYK-180, manufactured by BYK-Chemie GmbH) were mixed. The mixture was dispersed for 30 minutes by a bead mill with zirconia beads, and then, by removing the zirconia beads, a magnesium hydroxide particle dispersion liquid was obtained. The average particle size of the magnesium hydroxide particles in the obtained magnesium hydroxide particle dispersion liquid was 840 nm.

200 parts by mass of the obtained magnesium hydroxide particle dispersion liquid, 230 parts by mass of a polysulfone resin solution, and 105 parts by mass of N-methyl-2-pyrrolidone (manufactured by Mitsubishi Chemical Corp.) were measured. The polysulfone resin solution was obtained by heat-dissolving polysulfone resin (trade name: Ultrazone S3010, manufactured by BASF Japan Ltd., true density: 1.24 g/cm$^3$) in N-methyl-2-pyrrolidone (manufactured by Mitsubishi Chemical Corp.) at 80 to 100°C to have a concentration of 30% by mass of polysulfone resin. The measured magnesium hydroxide particle dispersion liquid, polysulfone resin solution, and N-methyl-2-pyrrolidone were mixed with a planetary centrifugal mixer (trade name: Awatori Rentaro (THINKYMIXER) ARE-500, manufactured by THINKY Corp.) at room temperature at a rotation speed of 1000 min$^{-1}$ for about 10 minutes and filtered to obtain a film forming composition.

The obtained film forming composition was coated on a non-woven fabric (unit weight: 44 g/m$^2$, thickness: 87 $\mu$m) made of polyphenylene sulfide fiber (true density: 1.34 g/cm$^3$) with a knife coater so that the coating amount was 280 g/m$^2$, and the non-woven fabric was completely impregnated with the film forming composition. Thereafter, the non-woven fabric impregnated with the film forming composition was bathed in a water bath at room temperature for 5 minutes to remove the solvent and to coagulate, and then the residual solvent was removed by washing with water to obtain a water-containing film made of the magnesium hydroxide particles, the polysulfone resin and the non-woven fabric. The obtained film was dried at 80° C for 20 minutes with a drier to obtain a diaphragm for alkaline water electrolysis.

In the obtained diaphragm for alkaline water electrolysis, the thickness was 241 $\mu$m, the porosity was 72%, the average pore diameter was 0.55 $\mu$m, the ratio of large pores was 1.2%, the ionic conductivity was 108 mS/cm, the bubble point value was 490 kPa, and the surface pore diameter was 0.78 $\mu$m.

[Example 8]

200 parts by mass of barium sulfate particles (plate shapes, average particle size: 0.3 $\mu$m, specific surface

area: 6.5 m$^2$/g, aspect ratio: 2.4, true density: 4.5 g/cm$^3$), 150 parts by mass of N-methyl-2-pyrrolidone (manufactured by Mitsubishi Chemical Corp.) and 5 parts by mass of a dispersant (trade name: DISPERBYK-180, manufactured by BYK-Chemie GmbH) were mixed. The mixture was dispersed for 30 minutes by a bead mill with zirconia beads, and then, by removing the zirconia beads, a barium sulfate particle dispersion liquid was obtained. The average particle size of the barium sulfate particles in the obtained barium sulfate particle dispersion liquid was 291 nm.

200 parts by mass of the obtained barium sulfate particle dispersion liquid, 65 parts by mass of a polysulfone resin solution were measured. The polysulfone resin solution was obtained by heat-dissolving polysulfone resin (trade name: Ultrazone S3010, manufactured by BASF Japan Ltd., true density: 1.24 g/cm$^3$) in N-methyl-2-pyrrolidone (manufactured by Mitsubishi Chemical Corp.) at 80 to 100°C to have a concentration of 35% by mass of polysulfone resin. The measured barium sulfate particle dispersion liquid and polysulfone resin solution were mixed with a planetary centrifugal mixer (trade name: Awatori Rentaro (THINKYMIXER) ARE-500, manufactured by THINKY Corp.) at room temperature at a rotation speed of 1000 min$^{-1}$ for about 10 minutes and filtered to obtain a film forming composition.

The obtained film forming composition was coated on a non-woven fabric (weight per unit area: 100 g/m$^2$, thickness: 200 $\mu$m) made of polyphenylene sulfide fiber (true density: 1.34 g/cm$^3$) at a coating amount of 200 g/m$^2$ with a knife coater, and the nonwoven fabric was completely impregnated with the film forming composition. Thereafter, the non-woven fabric impregnated with the film forming composition was bathed in a water bath at room temperature for 5 minutes to remove the solvent and to coagulate, and then the residual solvent was removed by washing with water to obtain a water-containing film made of the barium sulfate particles, the polysulfone resin and the non-woven fabric. The obtained film was dried at 80° C for 20 minutes with a drier to obtain a diaphragm for alkaline water electrolysis.

In the obtained diaphragm for alkaline water electrolysis, the thickness was 232 $\mu$m, the porosity was 46%, the average pore diameter was 0.09 $\mu$m, the ratio of large pores was 0.3%, the ionic conductivity was 110 mS/cm, the bubble point value was 890 kPa, and the average surface diameter was 0.05 $\mu$m.

[Example 9]

200 parts by mass of magnesium hydroxide particles (plate shape, average particle size: 0.36 $\mu$m, specific surface area: 10 m$^2$/g, aspect ratio: 4.7, true density: 2.36 g/cm$^3$), 150 parts by mass of N-methyl-2-pyrrolidone (manufactured by Mitsubishi Chemical Corp.) and 5 parts by mass of a dispersant (trade name: DISPERBYK-180, manufactured by BYK-Chemie GmbH) were mixed. The mixture was dispersed for 30 minutes by a bead mill with zirconia beads, and then, by removing the zirconia beads, a magnesium hydroxide particle dispersion liquid was obtained. The average particle size of the magnesium hydroxide particles in the obtained magnesium hydroxide particle dispersion liquid was 276 nm.

200 parts by mass of the obtained magnesium hydroxide particle dispersion liquid, 50 parts by mass of a polysulfone resin solution were measured. The polysulfone resin solution was obtained by heat-dissolving polysulfone resin (trade name: Ultrazone S3010, manufactured by BASF Japan Ltd., true density: 1.24 g/cm$^3$) in N-methyl-2-pyrroli.done (manufactured by Wako Pure Chemical Industries, Ltd.) at 80 to 100°C to have a concentration of 35% by mass of polysulfone resin. The measured magnesium hydroxide particle dispersion liquid and polysulfone resin solution were mixed with a planetary centrifugal mixer (trade name: Awatori Rentaro (THINKYMIXER) ARE-500, manufactured by THINKY Corp.) at room temperature at a rotation speed of 1000 min$^{-1}$ for about 10 minutes and filtered to obtain a film forming composition.

The obtained film forming composition was coated on a non-woven fabric (weight per unit area: 100 g/m$^2$, thickness: 200 $\mu$m) made of polyphenylene sulfide fiber (true density: 1.34 g/cm$^3$) with a knife coater so that a coating amount was 210 g/m$^2$, and the non-woven fabric was completely impregnated with the film forming composition. Thereafter, the non-woven fabric impregnated with the film forming composition was bathed in a water bath at room temperature for 5 minutes to remove the solvent and to coagulate, and then the residual solvent was removed by washing with water to obtain a water-containing film made of the magnesium hydroxide particles, the polysulfone resin and the non-woven fabric. The obtained film was dried at 80° C for 20 minutes with a drier to obtain a diaphragm for alkaline water electrolysis.

In the obtained diaphragm for alkaline water electrolysis, the thickness was 248 $\mu$m, the porosity was 45%, the average pore diameter was 0.11 $\mu$m, the ratio of large pores was 0.6%, the ionic conductivity was 129 mS/cm, the bubble point value was 930 kPa, and the surface pore diameter was 0.12 $\mu$m.

From the above results, the diaphragms for alkaline water electrolysis in Examples 1 to 9 prepared to be 0.05 $\mu$m to 0.6 $\mu$m in the average pore diameter and to have the porosity of 25 to 80% were recognized as the diaphragms having the high bubble point value and the excellent gas barrier properties while maintaining high ionic conductivity, compared with the diaphragm in Comparative Example 1 having the average pore diameter of more than 0.6 $\mu$m, the diaphragm in Comparative Example 2 having the porosity smaller than 25%, the diaphragm in Comparative Example 3 having the porosity larger than 80%, and the diaphragm in Comparative Example 4 having the average pore diameter smaller than 0.05 $\mu$m.

INDUSTRIAL APPLICABILITY

The diaphragm for alkaline water electrolysis of the present invention has both higher ionic conductivity (ion permeability) and higher gas barrier properties. Therefore, the diaphragm for alkaline water electrolysis of the present invention can be suitably used as diaphragms for water electrolysis using alkaline aqueous solutions as electrolytic solutions. In addition to the above-mentioned diaphragms for alkaline water electrolysis, it can be used for applications, for example, separators for cells such as separators for alkaline fuel cells, separators for primary batteries and separators for secondary batteries, and separators for salt electrolysis.

EXPLANATION OF REFERENCES

1 Diaphragm for alkaline water electrolysis
2 Single membrane layer
3 Support layer
10 Cross-section of diaphragm for alkaline water electrolysis
11 Surface of diaphragm for alkaline water electrolysis
12 Range for measurement
S Depth direction from surface of diaphragm for alkaline water electrolysis
a Width of cross-section perpendicular to surface of diaphragm for alkaline water electrolysis

**Claims**

1.  A diaphragm for alkaline water electrolysis comprising an organic polymer and inorganic particles, said diaphragm having pores with an average pore diameter of 0.05 $\mu$m to 0.6 $\mu$m, and having 25% to 80% of porosity, each of said pores being defined by an area enclosed by an outside edge in a range in a cross-section perpendicular to a surface of said diaphragm, and said range being located:

    with respect to a width <a> of said cross-section, 0.4 $\times$ <a> or more away from both ends in a longitudinal direction of said cross-section toward a center; and
    between positions located 2 $\mu$m and 15 $\mu$m away from said surface in a depth direction of said diaphragm.

FIG. 1

FIG. 2

## INTERNATIONAL SEARCH REPORT

| | International application No. |
|---|---|
| | PCT/JP2019/037016 |

A. CLASSIFICATION OF SUBJECT MATTER
Int.Cl. C25B13/02(2006.01)i, C25B1/04(2006.01)i

According to International Patent Classification (IPC) or to both national classification and IPC

B. FIELDS SEARCHED

Minimum documentation searched (classification system followed by classification symbols)
Int.Cl. C25B13/02, C25B1/04

Documentation searched other than minimum documentation to the extent that such documents are included in the fields searched
  Published examined utility model applications of Japan  1922–1996
  Published unexamined utility model applications of Japan 1971–2019
  Registered utility model specifications of Japan   1996–2019
  Published registered utility model applications of Japan 1994–2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2018/139610 A1 (ASAHI KASEI CORPORATION) 02 August 2018, examples 1, 3 <br> & CN 110023542 A | 1 |
| X | JP 2017-66184 A (ASAHI KASEI CORPORATION) 06 April 2017, example 1 <br> (Family: none) | 1 |
| X | JP 2015-520294 A (NV BEKAERT SA) 16 July 2015, paragraphs [0068], [0073] <br> & US 2015/0064606 A1, paragraphs [0075], [0080]–[0084] | 1 |

☒ Further documents are listed in the continuation of Box C.  ☐ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
|   09.10.2019 |   29.10.2019 |

| Name and mailing address of the ISA/ <br>   Japan Patent Office <br>   3-4-3, Kasumigaseki, Chiyoda-ku, <br>   Tokyo 100-8915, Japan | Authorized officer <br><br><br> Telephone No. |
|---|---|

Form PCT/ISA/210 (second sheet) (January 2015)

**INTERNATIONAL SEARCH REPORT**

| International application No. |
|---|
| PCT/JP2019/037016 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 00/20493 A1 (TONEN KAGAKU KK) 13 April 2000 & US 2005/0098913 A1 & US 2009/0098449 A1 & EP 1153969 A1 | 1 |
| A | JP 2014-129563 A (ASAHI KASEI CORPORATION) 10 July 2014 (Family: none) | 1 |
| A | JP 2017-2389 A (KAWASAKI HEAVY IND LTD.) 05 January 2017 & US 2018/0171494 A1 & EP 3312306 A1 | 1 |
| A | JP 2013-204146 A (ASAHI KASEI CORPORATION) 07 October 2013 (Family: none) | 1 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013204146 A
- JP 2014129563 A